# EUROPEAN PATENT SPECIFICATION

(11) **EP 1 821 491 B1**
(45) Date of publication and mention of the grant of the patent: **23.12.2009**
(21) Application number: 06775464.8
(22) Date of filing: 23.08.2006
(51) Int. Cl.: H04L 29/06, H04L 29/14, H04L 12/56, H04L 12/28, G06F 11/20

(54) **A MULTICAST REALIZING METHOD IN ACCESS DEVICE BASED ON MAIN AND BACKUP BOARD SWITCHING**
VERFAHREN FÜR MULTICAST IN EINEM ZUGRIFFSGERÄT BASIEREND AUF HAUPT- UND BACK-UP-SCHALTEN
PROCEDE DE REALISATION MULTICAST DANS UN DISPOSITIF D'ACCES BASEE SUR UNE COMMUTATION DE CARTE PRINCIPALE A CARTE DE SAUVEGARDE

(30) Priority: 06.09.2005 CN 200510099376
(43) Date of publication of application: 22.08.2007
(73) Proprietor: Huawei Technologies Co., Ltd., Longgang District Shenzhen Guangdong 518129 (CN)
(72) Inventor: YU, Jinning Huawei Technologies Co. Ltd, Guangdong Province 518129 (CN)
(74) Representative: Thun, Clemens
(86) International application number: PCT/CN2006/002146
(87) International publication number: WO 2007/028315

(56) References cited:
- WO-A-99/03038
- WO-A-2005/043936
- CN-A- 1 437 348
- CN-A- 1 523 840
- CN-A- 1 551 652
- US-A1- 2004 146 062

## Description

### Field of the Invention

The present invention relates to communication technology and in particular, it relates to a method for ensuring IP multicast service quality in access devices.

### Background of the Invention

As networking technology and the Internet has developed, a huge variety of high-bandwidth multimedia applications have appeared, such as video conferencing, e-learning, telemedicine, Internet broadcasting, and so on. However, conventional networks were designed for classical point-to-point communication in order to guarantee reliable data transmission, and the vast majority of transport protocols used are also point-to-point. In this type of conventional network, high-bandwidth multimedia applications necessarily result in network congestion, increased latency and network bottlenecks. People have proposed many different solutions to relieve these bottlenecks, such as increasing bandwidth, changing network traffic structure, and applying IP multicast technology. Because IP multicast can effectively save network bandwidth and decrease network load, this technology has been widely applied.

To improve the reliability of communication devices, a scheme using active and standby devices with hot switchover is often applied. Active and standby hot switchover refers to two identical boards operating simultaneously, one board is active and one board functions as a standby. Currently, many access devices that support multicast video services support active and standby hot switchover. Consequently, when the active board breaks down, the system automatically switches over to the standby board.

In the majority of current access devices, the control board and network board are all in one, so when active board to standby board switchover occurs it cuts off transmission of the multicast video stream. Because client online and offline behavior is dynamic and unpredictable, the method used in the current technology is that client online data is not processed. Consequently, after switchover all online clients become offline. If a client wishes to watch a program, they must actively reorder the program in the same way as it originally came online.

The aim of switchover is to reduce failure time of a single board and its effect on service to an absolute minimum. However, if switchover causes all multicast clients to go offline, it affects all clients on every port of this access device, which is inconsistent with the motive and aim of switchover. Besides, because failure of a single board is unpredictable, if the standby board does not backup the CDR (Call Detail Record), when an active board fails, the new active board, following switchover, will lose the multicast service CDR. The provider uses the CDR to calculate client's video reception charge; this clearly causes the provider to suffer a significant loss.

Hence, how to keep clients online during the switchover process, ensure an uninterrupted multicast video stream, and lessen the impact on multicast service is an issue we must consider during switchover.
CN1437348A discloses a method for synchronizing data between the active board and the standby board in a communication system, including: setting a data buffer in the active board and the standby board respectively; once data is changed in the active board, writing the changed data of the active board into the buffer; the buffer processes the data; when the data in the buffer reaches a specified quantity, the real-time synchronization process of the active board reads data from the buffer and sends it to the real-time synchronization process of the standby board; updating the database of the standby board and returning the operation result to the active board; if the operation result is synchronization success, deleting the corresponding data in the buffer; otherwise, resending data until the records in the buffer are empty.
In addition, WO99/03038A discloses a method for detecting a failure in a fault-tolerant computer system and a corresponding fault-tolerant computer system. The computer system is able to detect failures associated with a primary input/output processors as well as with a standby input/output processors, and is also able to discriminate between failures of the input/output processors and communication failures in the data communication network itself.

### Summary of the Invention

The purpose of the invention is to provide a method that ensures the quality of IP multicast service, keeps clients online during switchover of access devices, ensures an uninterrupted multicast stream, and decreases the impact of switchover on the multicast service.

According to this invention, method for implementing multicast in an access device based on switchover between an active board and a standby board is provided, said method comprising: a maintaining a real time communication between a standby board and an active board, and checking an operating status of the active board at all times;

changing data in the standby board based on a change to multicast client dynamic data in the active board;

performing a switchover from the active board to the standby board based on a detected failure of the active board ; and

the new active board sends a multicast data stream request to an upstream router based on saved data.

This invention also provides an access device according to claim 9. Various embodiments are provided according to the dependent claims.

Adopting the technical scheme of this invention guarantees that clients remain online during switchover, ensures an uninterrupted video stream, and thereby ensures that the switchover from active to standby does not significantly affect clients. Moreover, clients' multicast service CDR will not be lost which protects the interests of the provider.

### Brief Description of the Drawings

Figure 1 shows an implementation example of a multicast video network for the present invention, in which the access device supports system switchover.

Figure 2 is a procedural flowchart showing the system backup process between active and standby board.

Figure 3 is a procedural flowchart for showing the system switchover process between active and standby board.

### Detailed Description of the Embodiments

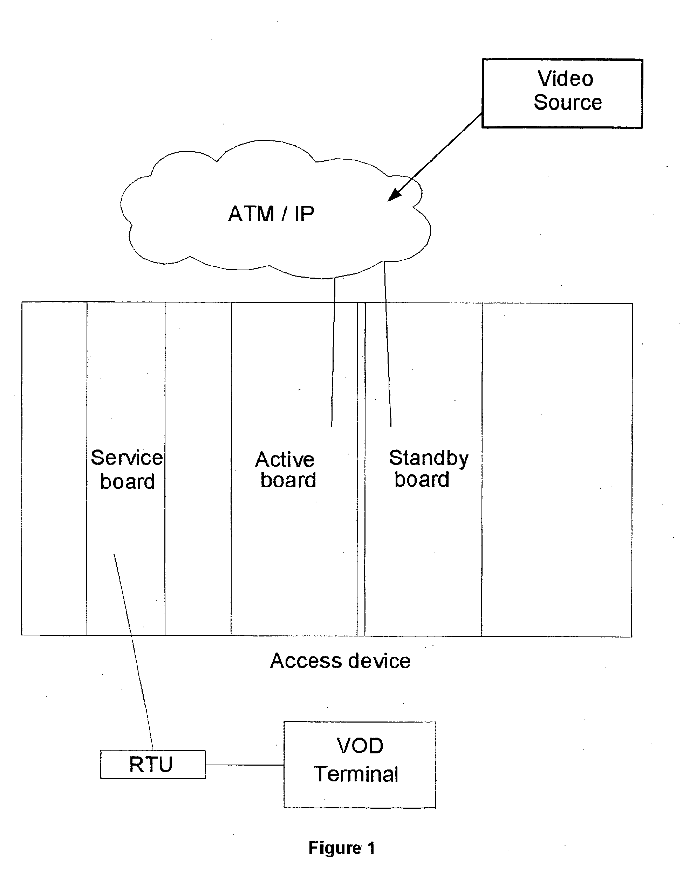

Figure 1 illustrates a simple example of an IP multicast video network for the present invention, in which the access device supports system switchover. In the diagram shown, the network is comprised of a video source, ATM/IP network, access device, remote terminal unit (RTU), and Video-on-Demand (VOD) terminal. Among these, the access device comprises a main board (active board and standby board) and service board; the uplink port of the main board connects to a remote video source via an IP/ATM network, and an edge router (not shown in this figure) that supports multiple multicast protocols (for example, including IGMP (Internet Group Management Protocol) and MLD (Multicast Listener Discovery) protocols) connects to the access device. The service board (such as an xDSL (digital subscriber line) board) connects to the VOD terminal (such as a TV with STB, PC, laptop, Personal Data Assistant (PDA), multimedia mobile phone, etc.) via an RTU (Remote Terminal Unit) (such as an ADSL (Asymmetric Digital Subscriber Line) modem). According to different types of service boards and VOD terminals, there are many ways to connect an access device to remote clients, such as, via PSTN (using optical fiber, twisted pair or other transmission medium), WIMAX (World Interoperability for Microwave Access) and other methods of network access (such as wireless broadband access). The access device described in the above network structure can be a digital subscriber line access multiplexer (DSLAM) or any other access device.

During IP multicast services, when a multicast client comes online, a multicast join message is sent, such as an IGMP report message. The service board then forwards the message to the main board, and the main board then sends the multicast join message to an upstream router. Requests for video streams are sent from routers to the video server using a multicast routing protocol (e.g. PIM-SM (Protocol Independent Multicast - Sparse Mode), PIM-DM (Protocol Independent Multicast-Dense Mode), or MSDP (Multicast Source Discovery Protocol). The video stream then follows the transmission circuit taken by the previous message to the uplink port of the main board; then the main board and service board forward them to the client making the request based on a forwarding table. When the currently operating main board breaks down, the access device automatically switches over to the standby board.

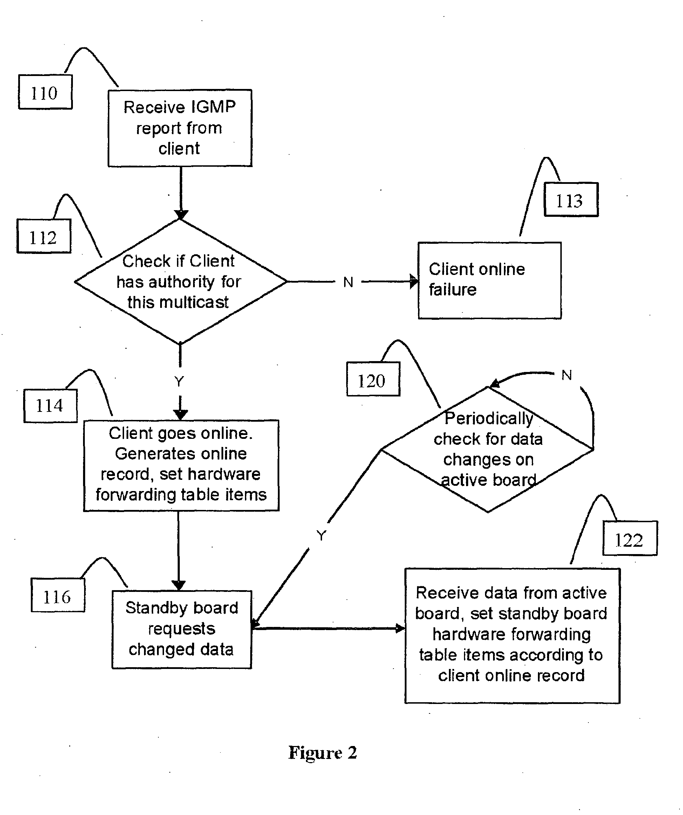

To ensure that the multicast clients remain online during system switchover, the video stream is not cut off and the multicast client CDR is not lost, thereby the impact on multicast service is minimized as much as possible. This invention provides flowcharts showing the system backup and switchover processes between the active board and standby board, as shown in figures 2.

Figure 2 below describes in detail the hot data backup implementation process for this invention. In figure 2, the active board is a master control board currently in a working state; the standby board is a master control board currently in a backup state.

The hot data backup process shown in figure 2 comprises the execution steps for the active board and the standby board.

When a multicast client connects to the network via the VOD terminal of an RTU, the VOD terminal creates a multicast join message from the client's VOD request and sends this to the access device; said method then starts to execute step 110.

In step 110, the access device receives a multicast client join message and passes it to the main board for processing.

Then step 112 is executed; the main control board checks whether the client's multicast request has authority to watch the program and determines the next step according to the check result. If the client does not have authority, go to step 113: the client fails to go online and this method concludes. If the client has authority, then execute step 114.

In step 114, the access device processes the multicast client and brings it online, generates an online record for the multicast client, sets items in the hardware forwarding table for the video multicast stream, and forwards the video stream from the uplink port of the active board to the client port. In this way, the multicast client can receive the video stream.

During logon, the standby board executes step 120. In as much as the system maintains real time communication between the active board and standby board, the standby board periodically checks whether data on the active board has changed. When a multicast client goes online and the active board generates a client online record, the standby board detects a data change on the active board (comprising client online record, channel the client is currently watching, channel number, channel status, and timer status) and then sends a backup request to the active board.

Next, the active board executes step 116. The active board sends the requested data to the standby board thus ensuring consistency of data between the active board and standby board.

Next, in step 122, the standby board receives the data sent by the active board and sets the items in the hardware forwarding table in the standby board according to the client's online record. Because the uplink port of the standby board is inactive, it does not forward a video stream, thus the items in the hardware forwarding table in the standby board does not interfere with or affect stream forwarding in the active board.

When a multicast client goes offline (not shown in figure 2), it generates a corresponding CDR in the active board. Meanwhile, the online record for the multicast client changes and corresponding items in the hardware forwarding table are deleted. At this point the standby board detects changes to the multicast client online record, multicast client offline record and multicast client CDR on the active board, and sends a backup request to the active board. The active board then sends the requested data to the standby board and the standby board also deletes corresponding items in its hardware forwarding table according to the multicast client offline record and other data. At this point, the multicast client CDR is already backed up on the standby board.

The above process ensures that multicast client online and offline dynamic data, call detail records and item settings in the hardware forwarding table on the standby board are identical to those on the active board.

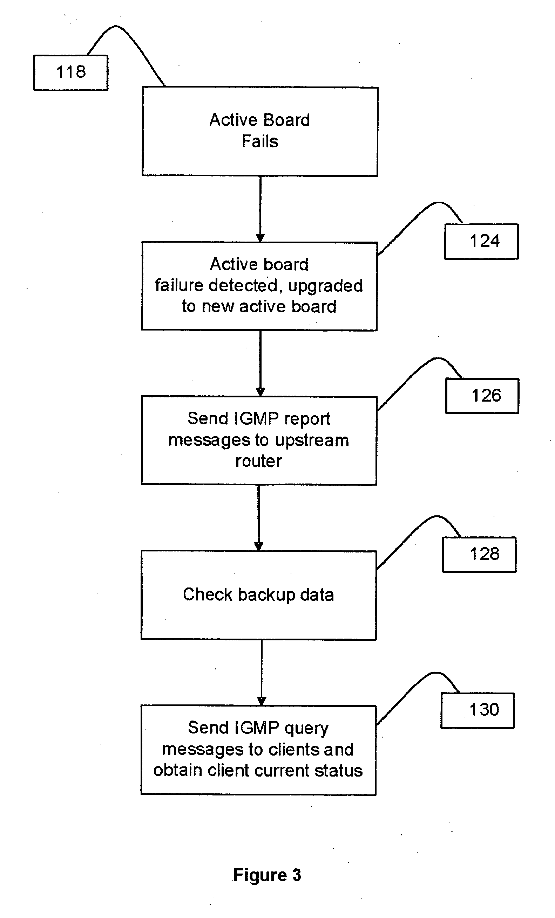

The following describes the system switchover process in detail with reference to figure 3.

The active board in figure 3 is a master control board currently in a working state; the standby board is a master control board currently in a backup state. When a failure in the active board occurs, the system switches from a hot data backup phase to the switchover phase, a particular process for implementing the switchover between the active board and the standby board is as follows.

In step 118, the active board fails and executes step 124; the standby board detects the abnormal status of active board, immediately implements switchover from the active board to the standby board and the standby board becomes the active board.

Thereupon, step 126 is executed; the new active board (i.e. the former standby board) sends multicast join request messages to the upstream router according to the multicast client online records, in order to avoid aging of forwarding table in the upstream router and to ensure an uninterrupted multicast stream. Because the items in the hardware forwarding table in the new active board (i.e. the former standby board) is already set, multicast streams can be transferred to multicast clients quickly. The period of stream interruption during switchover is merely the time it takes to restore communication links between the new active board (i.e. the former standby board) and service boards. The time it takes is in microseconds.

Afterwards, step 128 is executed, the new active board checks backup data; for example, it checks the logical relationship among backup data to ensure data accuracy and integrity.

Following this, step 130 is executed; the new active board sends multicast query messages to multicast clients to obtain their current status. During switchover, the new active board is unable to process protocol messages for a short period of time because it is busy checking each item of data backed up from the old active board, Therefore, during this checking period, the new active board is unable to perform normal processing of multicast query messages and multicast quit messages. To prevent aging of multicast clients and the inability of multicast clients to go offline, after completing data checks, it must immediately send IGMP query messages to the multicast client in order to ensure the access device obtains the current status of multicast clients as quickly as possible.

Figure 2 illustrates the process of data backup and switchover between active board and standby board. In this figure, the hot data backup only shows the hot data backup process for multicast clients during the process of coming online. The principle of hot data backup for multicast clients during the process of going offline is consistent with the hot data backup process illustrated in Fig.2, except that the hot data backup for multicast clients during the process of going offline includes additionally the hot backup for the multicast client CDR.

Adopting the method of active and standby data backup and switchover in this invention maintains data consistency in the active and standby boards while operating, and when the active board fails, the standby board becomes the new active board. The new active board sends IGMP report messages to upstream routers requesting the required video stream, and immediately transfers streams to multicast clients using the same hardware forwarding table items as the original active board. Accordingly, it keeps multicast clients online, maintains an uninterrupted video stream, and ensures the multicast client CDR is not lost during the switchover process from active to standby. In addition, after completing checks on backup data, the new active board sends IGMP query messages to multicast clients to obtain their current status, thus enabling immediate processing of client requirements. In summary, a method of the present invention can reduce the impact of active board failure on multicast services and improves multicast service quality.

The access device in this invention has an active board and a standby board. The standby board maintains real time communication with the active board, and checks the working status of the active board at any time. Switchover from the active board to the standby board is implemented according to the active board failure detected. The access device presented in this invention is also installed with a backup module, a checking module, a status request module and a multicast stream request module. The backup module, checking module, status request module, and multicast stream request module can be installed in the standby board, and of course, can also be installed independently to the standby board.

The backup module is primarily used to change data on the standby board based on changes to multicast client dynamic data in the active board. Here, the multicast client dynamic data comprises: multicast client online record, channel currently being watched by the multicast client, channel number, channel status, timer status, multicast client offline record, multicast client CDR (Call Detail Record), etc.. The backup module can refresh the standby board's multicast client CDR according to changes in the multicast client's dynamic data, set or delete items in the hardware forwarding table of the standby board, etc. The detailed method is as described above.

The checking module is primarily used to check the accuracy and/or integrity of the data backed up by the Backup Module, after switchover from the active board to the backup board has been performed.

During the checking procedure, the backup board does not process multicast join and multicast leave messages sent by multicast clients during this process normally. Hence, to prevent aging of multicast client online status and the inability to go offline, after checking is completed by the checking module, the request status module in this invention sends online status query messages to multicast clients. In this way, the post switchover new active board can correctly obtain the multicast client's current status.

The multicast stream request module is primarily used once switchover is finished to send multicast stream request messages to the upstream router according to the multicast client online record, channel currently being watched by the multicast client, channel number, channel status, and other data. In this way, the upstream router can send the requested multicast data stream to the new active board based on the multicast stream requests it receives. The new active board following switchover provides the multicast client with a multicast service with an uninterrupted multicast stream according to the multicast client online record, channel currently being watched by the multicast client, channel number, channel status, multicast client CDR and other data. In addition, because the new active board following switchover contains a backup of the multicast user CDR, the access device main board switchover process does not cause loss of the multicast user CDR information.

In the above description of the access device, the specific representation of online status query request messages, multicast data stream request messages and access devices are as described in the above method.

## Claims

1. A method for implementing multicast in an access device based on switchover between an active board and a standby board, said method comprising:
maintaining a real-time communication between a standby board and an active board, and checking (120) an operating status of the active board at all times;
**characterized in that** the method further comprises:
changing (116) data in the standby board based on a change to multicast client dynamic data in the active board;
performing (124) a switchover from the active board to the standby board based on a detected failure of the active board; and
the new active board sending (126) a multicast data stream request message to an upstream router based on saved data.

2. The method according to claim 1, wherein after the switchover from the active to the standby is completed,
the new active board checks (128) accuracy and/or integrity of backup data.

3. The method according to claim 2, wherein after the step of checking (128) accuracy and/or integrity of the backup data is completed,
the new active board sends (130) an online status query request to a multicast client.

4. The method according to claim 3, wherein the online status query request comprises:
an Internet Group Management Protocol, IGMP, query message and a Multicast Listener Discovery, MLD, protocol query message.

5. The method according to claim 1, wherein the multicast client dynamic data comprise one or more of the following: a multicast client online record, a channel currently being watched by a multicast client, a channel number, a channel status, a multicast client offline record, and a multicast client Call Detail Record, CDR.

6. The method according to claim 5, wherein the changing data in the standby board based on a change to multicast client dynamic data in the active board includes: refreshing data on the standby board for multicast client online record, channel currently being watched by a multicast client, channel number and channel status based on a change in the online record, the channel currently being watched by the multicast client, the channel number, and the channel status on the active board; and refreshing a multicast client CDR for the standby board according to said multicast client online/offline record, and setting or deleting items in a hardware forwarding table of the standby board.

7. The method according to any one of claims 1 to 6, wherein said access device comprises a Digital Subscriber Line Access Multiplexer, DSLAM.

8. The method according to any one of claims 1 to 6, wherein the multicast data stream request message comprises an IGMP report message and an MLD protocol report message.

9. An access device comprising an active board and a standby board, the access device being adapted for the standby board to maintain a real time communication with the active board, to check an operating status of the active board at all times, and to perform a switchover from the active board to the standby board based on a detected failure of the active board,
**characterized in that** said access device also comprises:
a backup module adapted to change data in the standby board based on a change to multicast client dynamic data in the active board; and
a multicast stream request module adapted to send, after the switchover from the active to the backup is completed, a multicast data stream request message to an upstream router based on data stored on the new active board, causing the upstream router to send a multicast data stream to the new active board after the switchover.

10. The device according to claim 9, wherein said access device also comprises a checking module adapted to check accuracy and/or integrity of the backup data in the backup module, after the switchover from the active board to the backup board is completed.

11. The device according to claim 10, wherein said access device also comprises a status request module adapted to send an online status query request message to a multicast client after the checking module completes its checking, causing the new active board to obtain a multicast client current status after the switchover.

12. The device according to claim 9 , wherein the backup module is comprised in the standby board or separate from the standby board.

## Patentansprüche

1. Verfahren zum Implementieren von Multicast in einem Zugangsgerät auf der Basis eines Umschaltens zwischen einer aktiven Platine und einer Standby-Platine, wobei das Verfahren die folgenden Schritte umfasst:
Aufrechterhalten einer Echtzeit-Kommunikation zwischen einer Standby-Platine und einer aktiven Platine und Prüfen (120) eines Betriebsstatus der aktiven Platine zu allen Zeiten;
**dadurch gekennzeichnet, dass** das Verfahren ferner die folgenden Schritte umfasst:
Ändern (116) von Daten in der Standby-Platine auf der Basis einer Änderung an dynamischen Multicast-Client-Daten in der aktiven Platine;
Durchführen (124) eines Umschaltens von der aktiven Platine zu der Standby-Platine auf der Basis eines detektierten Ausfalls der aktiven Platine; und
die neue aktive Platine sendet (126) eine Multicast-Daten-Stream-Anforderungsnachricht zu einem signalaufwärts befindlichen Router auf der Basis abgespeicherter Daten.

2. Verfahren nach Anspruch 1, wobei, nachdem das Umschalten von Aktiv zu Standby abgeschlossen ist,
die neue aktive Platine die Genauigkeit und/oder Integrität von Backup-Daten prüft (128).

3. Verfahren nach Anspruch 2, wobei, nachdem der Schritt des Prüfens (128) der Genauigkeit und/oder Integrität der Backup-Daten abgeschlossen ist,
die neue aktive Platine eine Online-Status-Abfrageanforderung zu einem Multicast-Client sendet (130).

4. Verfahren nach Anspruch 3, wobei die Online-Status-Abfrageanforderung Folgendes umfasst:
eine Abfragenachricht des Internet Group Managemant Protocol IGMP und eine Protokollabfragenachricht der Multicast Listener Discovery MLD.

5. Verfahren nach Anspruch 1, wobei die dynamischen Multicast-Client-Daten eines oder mehrere von Folgendem umfasst: einen Multicast-Client-Online-Datensatz, einen gerade von einem Multicast-Client angeschauten Kanal, eine Kanalnummer, einen Kanalstatus, einen Multicast-Client-Offline-Datensatz und einen Call Detail Record CDR des Multicast-Clients.

6. Verfahren nach Anspruch 5, wobei das Ändern von Daten in der Standby-Platine auf der Basis einer Änderung an dynamischen Multicast-Client-Daten in der aktiven Platine Folgendes umfasst:
Auffrischen von Daten auf der Standby-Platine in Bezug auf den Multicast-Client-Online-Datensatz, den gerade von einem Multicast-Client angeschauten Kanal, die Kanalnummer und den Kanalstatus auf der Basis einer Änderung des Online-Datensatzes, des gerade von einem Multicast-Client angeschauten Kanals, der Kanalnummer und des Kanalstatus auf der aktiven Platine; und
Auffrischen eines Multicast-Client-CDR für die Standby-Platine gemäß dem Multicast-Client-Online/Offline-Datensatz und Setzen oder Löschen von Posten in einer Hardware-Weiterleitungstabelle der Standby-Platine.

7. Verfahren nach einem der Ansprüche 1 bis 6, wobei das Zugangsgerät einen Zugangsmultiplexer für digitalen Teilnehmeranschluss DSLAM umfasst.

8. Verfahren nach einem der Ansprüche 1 bis 6, wobei die Multicast-Daten-Stream-Anforderungsnachricht eine Meldungsnachricht des IGMP und eine Meldungsnachricht des MLD-Protokolls umfasst.

9. Zugangsgerät mit einer aktiven Platine und einer Standby-Platine,
wobei das Zugangsgerät dafür ausgelegt ist, dass die Standby-Platine eine Echtzeit-Kommunikation mit der aktiven Platine aufrechterhält und zu allen Zeiten einen Betriebsstatus der aktiven Platine zu prüfen und ein Umschalten von der aktiven Platine zu der Standby-Platine auf der Basis eines detektierten Ausfalls der aktiven Platine durchzuführen,
**dadurch gekennzeichnet, dass** das Zugangsgerät außerdem Folgendes umfasst:
ein Backup-Modul, das dafür ausgelegt ist, Daten in der Standby-Platine auf der Basis einer Änderung an dynamischen Multicast-Client-Daten in der aktiven Platine zu ändern; und
ein Multicast-Stream-Anforderungsmodul, das dafür ausgelegt ist, nachdem das Umschalten von Aktiv zu Backup abgeschlossen ist, eine Multicast-Daten-Stream-Anforderungsnachricht auf der Basis von auf der neuen aktiven Platine gespeicherten Daten zu einem signalaufwärts befindlichen Router zu senden, wodurch bewirkt wird, dass der signalaufwärts befindliche Router nach dem Umschalten einen Multicast-Daten-Stream zu der neuen aktiven Platine sendet.

10. Gerät nach Anspruch 9, wobei das Zugangsgerät außerdem ein Prüfmodul umfasst, das dafür ausgelegt ist, die Genauigkeit und/oder Integrität der Backup-Daten in dem Backup-Modul zu prüfen, nachdem das Umschalten von der aktiven Platine zu der Backup-Platine abgeschlossen ist.

11. Gerät nach Anspruch 10, wobei das Zugangsgerät außerdem ein Statusanforderungsmodul umfasst, das dafür ausgelegt ist, eine Online-Statusabfragenachricht zu einem Multicast-Client zu senden, nachdem das Prüfmodul seine Prüfung abschließt, wodurch bewirkt wird, dass die neue aktive Platine den aktuellen Multicast-Client-Status nach dem Umschalten erhält.

12. Gerät nach Anspruch 9, wobei das Backup-Modul aus der Standby-Platine besteht oder separat von der Standby-Platine ist.

## Revendications

1. Procédé de réalisation multicast dans un dispositif d'accès basé sur une commutation entre une carte active et une carte de secours, ledit procédé comprenant :
le maintien d'une communication en temps réel entre une carte de secours et une carte active, et la vérification permanente (120) d'un état opérationnel de la carte active ;
**caractérisé en ce que** le procédé comprend en outre :
le changement (116) de données dans la carte de secours en fonction d'un changement des données dynamiques du client multicast dans la carte active ;
l'exécution (124) d'une commutation de la carte active sur la carte de secours suite à la détection d'une panne de la carte active ; et
l'envoi par la nouvelle carte active (126) d'un message de requête de train de données multicast à un routeur amont basé sur les données sauvegardées.

2. Procédé selon la revendication 1, dans lequel au terme de la commutation de la carte active sur la carte de secours, la nouvelle carte active vérifie (128) l'exactitude et/ou l'intégrité des données de secours.

3. Procédé selon la revendication 2, dans lequel au terme de l'étape de vérification (128) de l'exactitude et/ou de l'intégrité des données de secours, la nouvelle carte active envoie (130) une requête d'interrogation d'état en ligne à un client multicast.

4. Procédé selon la revendication 3, dans lequel la requête d'interrogation d'état en ligne comprend : un message d'interrogation de Protocole de Gestion de Groupe Internet, IGMP, (Internet Group Management Protocol) et un message d'interrogation de protocole de Découverte d'Auditeur Multicast, MLD (Multicast Listener Discovery).

5. Procédé selon la revendication 1, dans lequel les données dynamiques de client multicast comprennent une ou plusieurs des données suivantes : enregistrement de client multicast en ligne, chaîne actuellement visualisée par un client multicast, numéro de chaîne, état de la chaîne, enregistrement de client multicast hors ligne, et Enregistrement de Données d'Appel CDR (Call Detail Record) du client multicast.

6. Procédé selon la revendication 5, dans lequel le changement des données dans la carte de secours suite au changement des données dynamiques de client multicast dans la carte active comporte :
le rafraîchissement sur la carte de secours des données de l'enregistrement de client multicast en ligne, de la chaîne actuellement visualisée par un client multicast, du numéro de chaîne et de l'état de la chaîne d'après un changement de l'enregistrement en ligne, de la chaîne actuellement visualisée par le client multicast, du numéro de chaîne, et de l'état de la chaîne sur la carte active ; et
le rafraîchissement d'un CDR de client multicast pour la carte de secours en fonction dudit enregistrement de client multicast en ligne/hors ligne, et l'établissement ou la suppression d'éléments dans une table de transmission matérielle de la carte de secours.

7. Procédé selon l'une quelconque des revendications 1 à 6, dans lequel ledit dispositif d'accès comprend un Multiplexeur d'Accès de Ligne d'Abonné Numérique, DSLAM.

8. Procédé selon l'une quelconque des revendications 1 à 6, dans lequel le message de requête de train de données multicast comprend un message de rapport IGMP et un message de rapport de protocole MLD.

9. Dispositif d'accès comprenant une carte active et une carte de secours,
le dispositif d'accès étant adapté pour :
que la carte de secours maintienne une communication en temps réel avec la carte active, vérifier en permanence un état opérationnel de la carte active, et effectuer une commutation de la carte active sur la carte de secours suite à la détection d'une panne sur la carte active,
**caractérisé en ce que** ledit dispositif d'accès comprend également :
un module de secours adapté pour changer les données dans la carte de secours en fonction d'un changement des données dynamiques du client multicast dans la carte active ; et
un module de requête de train multicast adapté pour envoyer, au terme de la commutation de la carte active sur la carte de secours, un message de requête de train de données multicast à un routeur amont en fonction des données sauvegardées sur la nouvelle carte active, amenant le routeur amont à envoyer un train de données multicast à la nouvelle carte active après la commutation.

10. Dispositif selon la revendication 9, dans lequel ledit dispositif d'accès comprend également un module de vérification adapté pour vérifier l'exactitude et/ou l'intégrité des données de secours dans le module de secours, au terme de la commutation de la carte active sur la carte de secours.

11. Dispositif selon la revendication 10, dans lequel ledit dispositif d'accès comprend également un module de requête d'état adapté pour envoyer un message de requête d'interrogation d'état en ligne à un client multicast au terme de la vérification par le module de vérification, amenant la nouvelle carte active à obtenir un état actuel du client multicast après la commutation.

12. Dispositif selon la revendication 9, dans lequel le module de secours est compris dans la carte de secours ou séparé de la carte de secours.
